# EUROPEAN PATENT APPLICATION

(11) **EP 4 676 038 A1**
(43) Date of publication of application: **07.01.2026**
(21) Application number: 24306094.4
(22) Date of filing: 02.07.2024
(51) Int. Cl.: H04N 19/11, H04N 19/147, H04N 19/176, H04N 19/593

(54) **TMRL WITH BLOCK VECTORS**

(71) Applicant: InterDigital CE Patent Holdings, SAS, 75017 Paris (FR)
(72) Inventor: NASER, Karam, 35250 MOUAZE (FR); LE LEANNEC, Fabrice, 35830 BETTON (FR); CHEN, Ya, 35700 RENNES (FR); RADOSAVLJEVIC, Milos, 35000 RENNES (FR)
(74) Representative: Vossius & Partner Patentanwälte Rechtsanwälte mbB

(57) **Abstract**

A video decoding device including a processor may be configured to obtain a template-based multiple reference line intra prediction (TMRL) candidate list comprising a set of TMRL combinations. Each TMRL combination may include an index to a reference line and an allowed intra-prediction mode. The processor may obtain a set of available block vector (BV) predictors. The processor may update the TMRL candidate list based on the set of TMRL combinations and the set of available BV predictors. The processor may select a candidate for prediction from the updated TMRL candidate list. The processor may predict a video block based on the selected candidate. The TMRL candidate list may be obtained using template cost. The updating of the TMRL candidate list may include comparing template cost of each of the TMRL candidates to the template cost of each of the BV predictors.

## Description

### BACKGROUND

Video coding systems may be used to compress digital video signals, e.g., to reduce the storage and/or transmission bandwidth needed for such signals. Video coding systems may include, for example, block-based, wavelet-based, and/or object-based systems.

### SUMMARY

Systems, methods, and instrumentalities are disclosed herein associated with the field of video compression.

A video decoding or encoding device and method may include obtaining a template-based multiple reference line intra prediction (TMRL) candidate list comprising a set of TMRL combinations. Each TMRL combination may include an index to a reference line and an allowed intra-prediction mode. A set of available block vector (BV) predictors may be obtained.

The TMRL candidate list may be updated based on the set of TMRL combinations and the set of available BV predictors. A candidate for prediction from the updated TMRL candidate list may be selected. A video block may be predicted based on the selected candidate.

A TMRL candidate list comprising a set of TMRL combinations may be obtained. The TMRL candidate list may be obtained using template cost. The candidate list may be updated based on the set of TMRL combination and the sets of BV predictors (e.g., available BV predictors). The template cost is used to compare these combinations to the template cost of the available BV candidates, and a candidate (e.g., the best candidate) may be selected. For example, a video block may be predicted based on the selected candidate.

The TMRL candidate list may be obtained using template cost. The updating of the TMRL candidate list may include comparing template cost of each of the TMRL candidates to the template cost of each of the BV predictors. The selecting of the candidate may include selecting the best candidate from the updated TMRL candidate list.

The obtaining of the set of available BV predictors may include calculating template cost of a set of BV candidates. The set of BV candidates may include a number of BV predictors in the set of BV predictors multiplied by a number of MRL values.

The updating of the TMRL candidate list may include adding the set of BV candidates to the TMRL candidate list. A subset of the updated TMRL candidate list may be selected.

An index may indicate (e.g., send or receive) a candidate from the subset of the updated TMRL candidate list to be used for prediction.

The obtaining of the BV predictors may include obtaining the BV predictors based on BVs collected using at least one of an IntraTMP mode, IBC mode, TIMD mode, TIMD mode, SGPM mode, or TMRL mode. The obtaining of the BV predictors may include obtaining the BV predictors based on BVs that are generated using ARBVP process.

The predicting of the video block based on the selected candidate may include using a BV to generate prediction, if the selected candidate is a BV predictor and using a prediction mode and an MRL index associated with the selected candidate, if the selected candidate is a TMRL candidate.

A template-based multiple reference line intra prediction (TMRL) candidate list comprising a set of TMRL combinations may be obtained. Each TMRL combination may include an index to a reference line and an allowed intra-prediction mode.

A video encoding or decoding device may include a processor configured to obtain a template-based multiple reference line intra prediction (TMRL) candidate list comprising a set of TMRL combinations. Each TMRL combination may include an index to a reference line and an allowed intra-prediction mode.

A set of available block vector (BV) predictors may be obtained. A template cost of a set of BV candidates associated with the available BV predictors may be calculated. The best BV from the set of BV candidates based on template cost may be selected. Blending weights of the best BV and each of the TMRL combination in the set of TMRL combinations may be calculated to generate an updated TMRL candidate list.

A candidate for prediction from the updated TMRL candidate list may be selected. A video block based on the selected candidate may be predicted.

These examples may be performed by a device with a processor. The device may be an encoder or a decoder. These examples may be performed by a computer program product which is stored on a non-transitory computer readable medium and includes program code instructions. These examples may be performed by a computer program comprising program code instructions. These examples may be performed by a bitstream comprising information representative of the template matching prediction mode.

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). A computer-readable medium may include instructions for causing one or more processors to perform methods described herein. A computer program product may include instructions which, when the program is executed by one or more processors, may cause the one or more processors to carry out the methods described herein.

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 illustrates an example video encoder.
FIG. 3 illustrates an example video decoder.
FIG. 4 illustrates an example of a a system in which various aspects and examples may be implemented.
FIG. 5 illustrates an extended MRL candidate list.
FIG. 6 illustrates the template area.

### DETAILED DESCRIPTION

A more detailed understanding may be had from the following description, given by way of example in conjunction with the accompanying drawings.

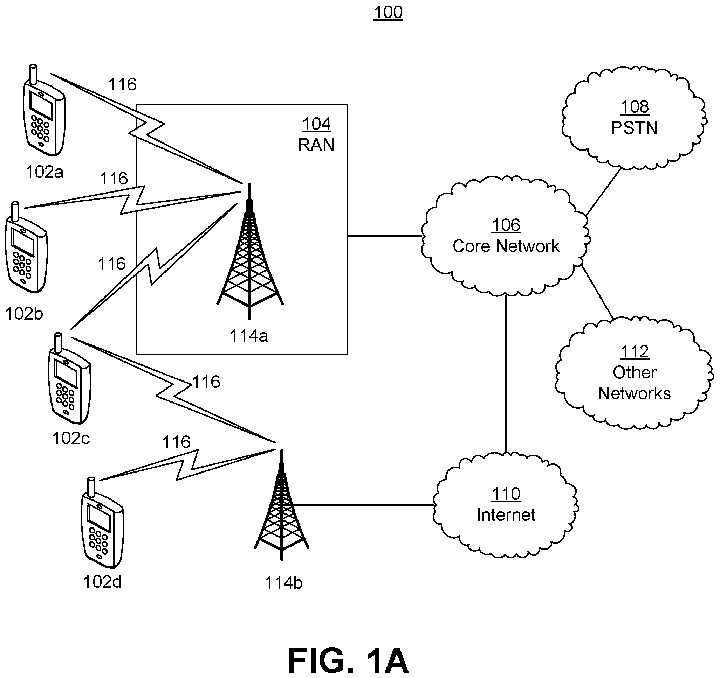

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

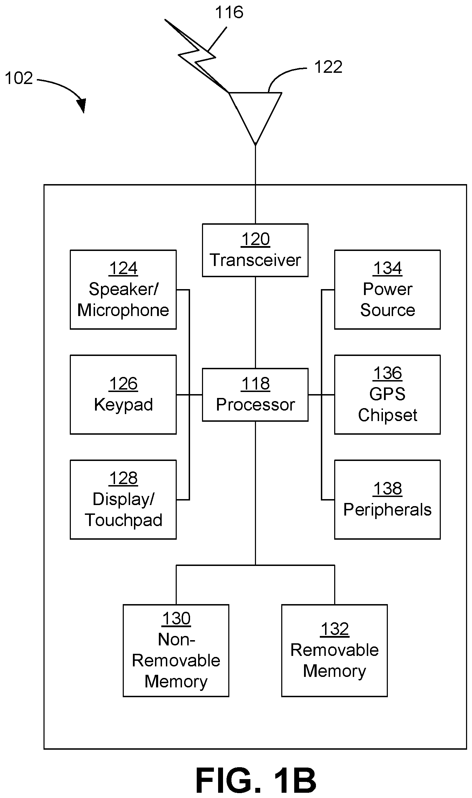

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. As suggested above, the processor 118 may include a plurality of processors. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

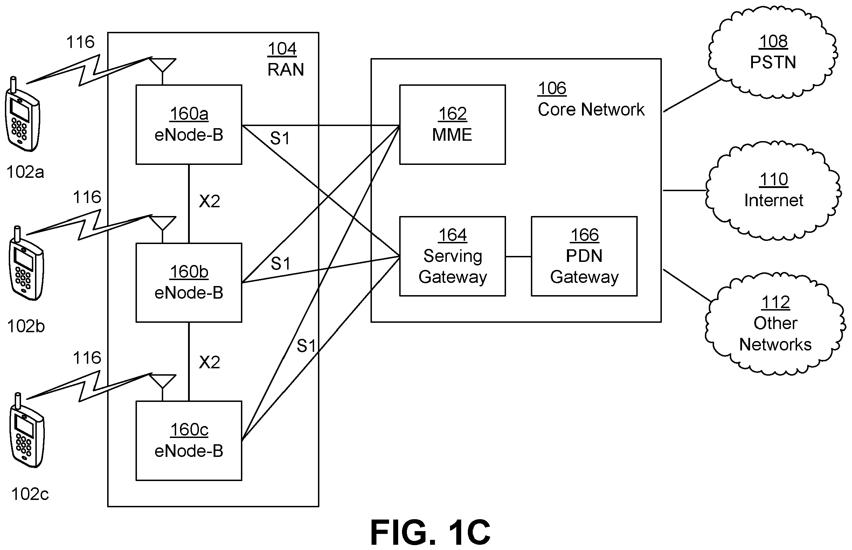

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11 ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11 ah. The channel operating bandwidths, and carriers, are reduced in 802.11 af and 802.11 ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

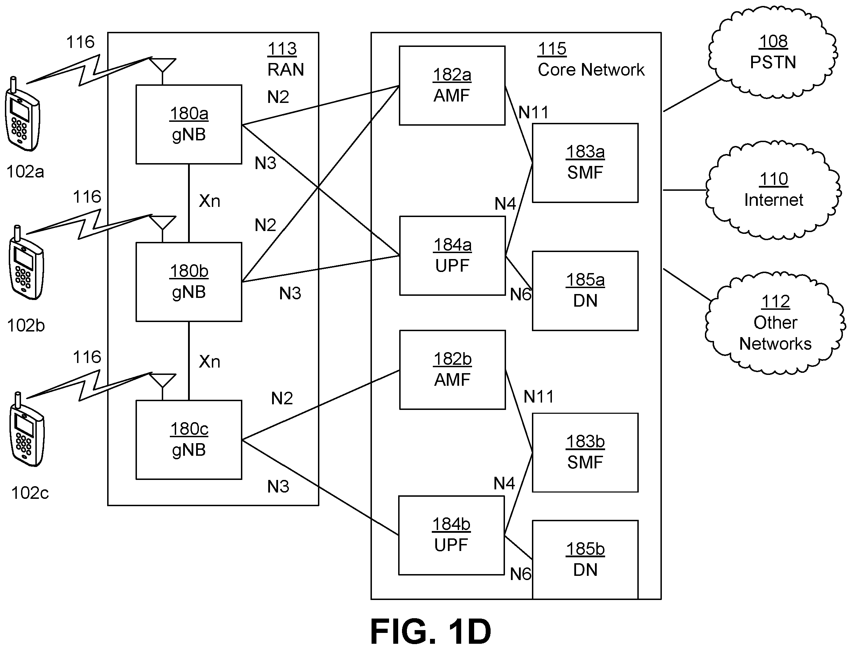

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

The aspects described and contemplated in this application may be implemented in many different forms. FIGS. 1A-6 described herein may provide some examples, but other examples are contemplated. The discussion of FIGS. 1A-6 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

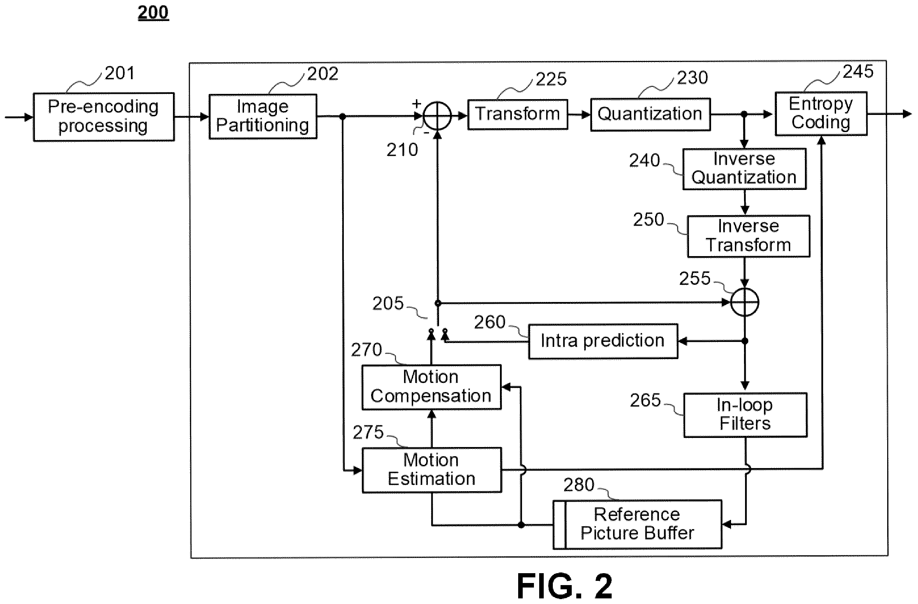

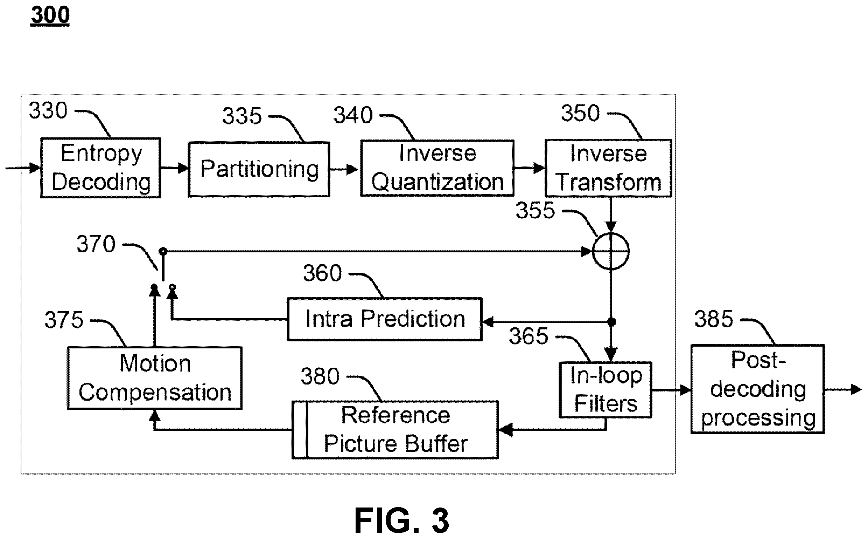

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as bits, bit depth, etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

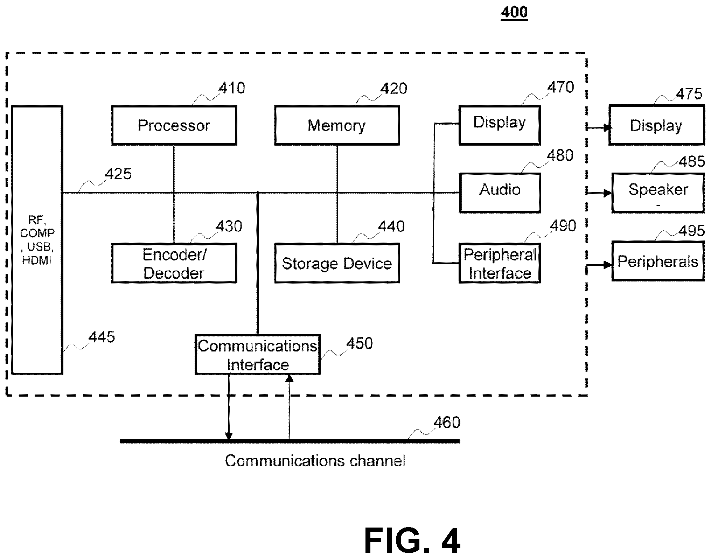

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth^{®} network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, may include processes performed by a decoder of various implementations described in this application, for example, identifying a reference picture (e.g., reference frame) associated with a block (e.g., a current block), obtaining a template-based multiple reference line intra prediction (TMRL) candidate list comprising a set of TMRL combinations. Each TMRL combination may include an index to a reference line and an allowed intra-prediction mode. A set of available block vector (BV) predictors may be obtained. The TMRL candidate list based on the set of TMRL combinations and the set of available BV predictors may be updated. A candidate for prediction from the updated TMRL candidate list may be selected. A video block may be predicted based on the selected candidate.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, may include processes performed by an encoder of various implementations described in this application, for example, obtaining a template-based multiple reference line intra prediction (TMRL) candidate list comprising a set of TMRL combinations. Each TMRL combination may include an index to a reference line and an allowed intra-prediction mode. A set of available block vector (BV) predictors may be obtained. The TMRL candidate list based on the set of TMRL combinations and the set of available BV predictors may be updated. A candidate for prediction from the updated TMRL candidate list may be selected. A video block may be predicted based on the selected candidate.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, for example, coding syntax on template matching prediction, including but not limited to, a fusion flag, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, an encoding function on an input for a block using a precision factor, etc. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" may (e.g., may also) be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g., using a monitor, screen, or other type of display) a resulting image (e.g., an image from residual reconstruction of the video bitstream). The TV, set-top box, cell phone, tablet, or other electronic device may receive a signal including an encoded image and perform decoding.

These examples may be performed by a device with at least one processor. The device may be an encoder or a decoder. These examples may be performed by a computer program product which is stored on a non-transitory computer readable medium and includes program code instructions. These examples may be performed by a computer program comprising program code instructions. These examples may be performed by a bitstream comprising information representative of template matching prediction mode.

Various intra prediction modes (e.g., as supported by Enhanced Compression Model 10) may be provided. To capture the arbitrary edge directions presented in natural video, ECM may support a plurality (e.g., 65) of directional intra prediction modes, for example, as in VVC. For predicting blocks with smoothly varying textures, VVC may use the PLANAR and DC modes.

When DIMD (Decoder Side Intra Mode Derivation) is applied, up to five intra prediction modes may be derived from the gradients in a template of reconstructed neighbor samples. A plurality of predictors (e.g., five predictors) may be combined with the planar mode predictor with weights derived from the histogram of gradients.

When used, TIMD (Template-based Intra Mode Derivation) may be applied (e.g., the same way) on the encoder and decoder sides. For each intra prediction mode in the MPM list of the current block, if needed, supplemented with default modes, a prediction of the template of the block from the decoded reference samples of the template may be computed. The SATD (Sum of Absolute Transformed Differences) between this prediction and the template of the block may be calculated. The two intra prediction modes satisfying a condition (e.g., with the minimum SATDs) may be selected as the TIMD modes.

Intra template matching prediction (IntraTMP) is an intra prediction mode that may copy a prediction block from the reconstructed part of the current frame, whose L-shaped template most closely matches the current template. For a predefined search range, the encoder may search for the most similar template to the current template in a reconstructed part of the current frame and may use the corresponding block as a prediction block. The encoder may signal the usage of this mode. The prediction operation (e.g., same prediction operation) may be performed at the decoder side.

In Intra Block Copy (IBC), the prediction may be obtained from a reference block within the same picture indicated by a block vector. To predict the samples of a block of width W and height H, Matrix weighted Intra Prediction (MIP) may take one line of H reconstructed neighboring boundary samples left of the block and one line of W reconstructed neighboring boundary samples above the block as input. The generation of the prediction signal may be based on averaging neighboring samples, matrix vector multiplication with the averaged samples, and linear interpolation.

Spatial geometric partitioning mode (SGPM) is an intra mode that resembles the inter coding tool of geometric partitioning mode (GPM), where the two prediction parts may be generated from intra predicted process. In this mode, a candidate list may be built with each entry containing one partition split and two intra prediction modes. The selected candidate index may be signaled.

Block vector usage in DIMD, TIMD and SGPM may be provided herein. The block vectors obtained from neighboring blocks may be used in SGPM modes. The template cost may be used to select the best intra modes among the available intra modes and block-vector based modes. Specifically, up to a certain number of block vectors (e.g., 6 block vectors) may be obtained from neighboring blocks coded in IBC or IntraTMP. A candidate list of a certain size (e.g., size 26) may be constructed with a number of regular modes (e.g., 3 regular modes) and a number of block-vector (e.g., 6 block vector) based prediction and predefined split direction. The template cost may be employed to reorder the list and obtain candidates (e.g., the 16 best candidates).

For DIMD, a plurality of intra modes (e.g., up to 5 intra modes) may be obtained from the histogram of oriented gradient of the reconstructed template. These intra modes may be blended with the planar mode or block vector-based mode obtained from neighboring blocks. The template cost may be employed to decide between using planar and block-vector based predictor.

For TIMD, a combination of block-vector prediction and TIMD may be utilized. The TIMD template analysis process may be extended to include prediction using block-vectors from neighboring blocks coded in IBC or IntraTMP. TIMD template analysis may be performed to obtain up to 3 intra modes: one non-directional (planar or DC) and 2 non directionals. One or more of the three modes may be replaced by block-vector based prediction, for example, depending on the template cost.

Auto-relocated block vector prediction (AR-BVP) may be provided. AR-BVP candidates may be the candidates that may be added to the existing merge list candidates. These candidates may be generated by performing vector addition of the block vector of a merge candidate and the block vector of any nearby CU coded in IntraTMP or IBC. Six nearby positions of CU's may be predefined and may include center position: Position referenced by the current block vector, top left position, top right position, bottom left position, bottom right position, left position. These new candidates may be added to the merge candidate list and evaluated with template matching in IntraTMP mode.

The use of ARBVP may be further extended to SGPM, DIMD and TIMD. These modes use the merge list block vectors and evaluate, along with regular intra modes, to select best mode(s) for the final prediction. It is noted that the original merge list can have up to 50 block vectors. Adding BVP, the number can be multiplied by a factor (e.g., 6). This is because each candidate can generate more candidates with ARBVP process. This is the worst case scenario that can be far from the actual observed number of candidates.

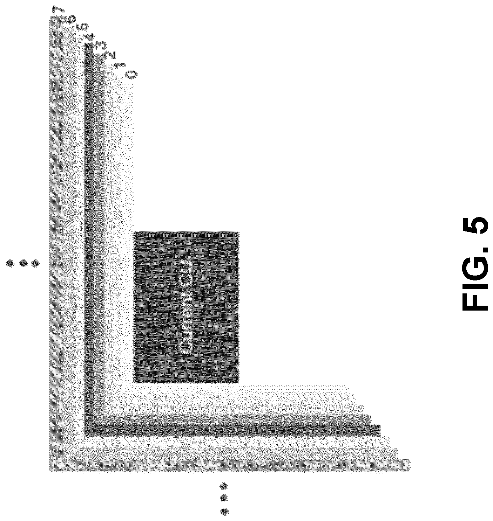

Extended multiple reference line (MRL) list may be provided. FIG. 5 illustrates an extended MRL candidate list. MRL list may be extended to include more reference lines for intra prediction. The extended reference line list consists of line indices {1, 3, 5, 7, 12} as illustrated in FIG. 5. For template-based intra mode derivation (TIMD), instead of the full MRL candidate list, only the first two reference line candidates, i.e., {1, 3}, may be used.

Template-based multiple reference line intra prediction (TMRL) may be provided. The TMRL mode may combine reference line and prediction mode together and uses a template matching method to construct a list of candidate combinations. An index to the candidate combination list is coded to indicate which reference line and prediction mode is used in coding the current block. The regular multiple reference line (MRL) for the non-TIMD part is replaced by TMRL mode.

The TMRL mode extends reference line candidate list and the intra-prediction-mode candidate list. The extended reference line candidate list is {1, 3, 5, 7, 12}. The restriction on the top CTU row is unchanged. The size of the intra-prediction-mode candidate list is 10. The construction of the intra-prediction-mode candidate list is similar to MPM except the PLANAR mode is excluded from the intra-prediction-mode candidate list, DC mode may be added after 5 neighboring PUs' modes and DIMD modes, for example, if it is not included and the angular modes with delta angles from ±1 to ±4 (compared the existing angular modes in the intra-prediction-mode candidate list) are added. The precision of angular prediction may be extended from 65 to 129. Additionally non-adjacent positions are added as candidates in constructing the intra candidate list. If the neighboring or non-adjacent blocks are coded with SGPM or GPM modes, the intra modes of the blocks are replaced by the partitioning angles.

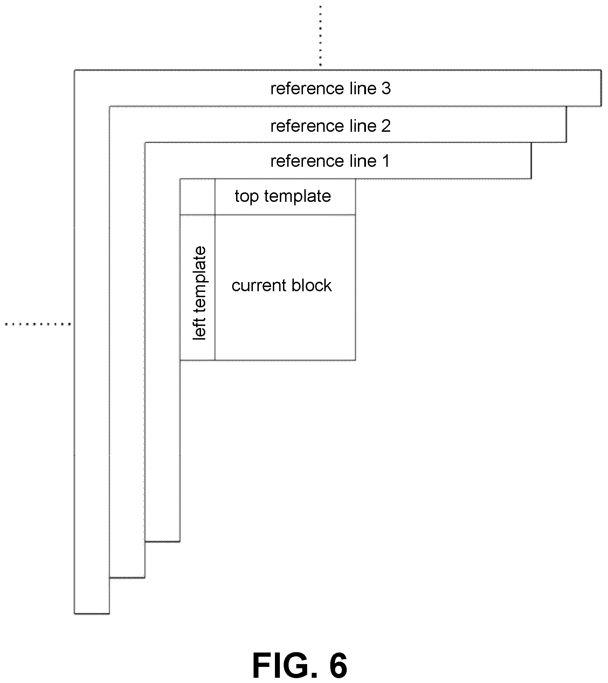

FIG. 6 illustrates an example of a template area. The TMRL candidate may be constructed as follows. There are 5x10=50 combinations of the extended reference line and the allowed intra-prediction modes for a block. Since the extended reference line starts from reference line 1, the area covered by reference line 0 is used for template matching. As illustrated in FIG. 6, the SAD costs over the template area may be calculated between the predictions (generated by 50 combinations) and the reconstructions. The 20 combinations with the least SAD cost may be selected in an ascending order to form the TMRL candidate list.

For TMRL signaling instead of coding the reference line and the intra mode directly, an index to the TMRL candidate list is coded to indicate which combination of reference line and prediction mode is used for coding the current block.

Block vector prediction is currently used in many combinations, for example, as described herein. Block vector prediction may be used for DIMD, SGPM and TIMD. It has been shown that this type of prediction can enhance the overall prediction and improve the bitrate saving.

It is observed that the only template-based tool that does not incorporate BV prediction is TMRL. It is asserted that this represents a missing point in the design, which leads to under performance of TMRL tool.

TMRL and BV prediction may be combined as described herein, as may be similar to other templates based modes (DIMD, SGPM and TMRL). The BV predictors may also be combined with regular MRL coding mode.

The TMRL candidate list may be updated with BV predictors. The TMRL combination list (e.g., of size 20, TMRL combinations) may be examined using the template cost. The TMRL final combination list (of size 20) may be compared to the template cost using the BV predictors. The candidate list may be updated based on the set of TMRL combination sand the sets of BV predictors (e.g., available BV predictors). A TMRL candidate list comprising a set of TMRL combinations may be obtained. Each TMRL combination may include an index to a reference line and/or an allowed intra-prediction mode.

The TMRL candidate list may be obtained using template cost. The updating of the TMRL candidate list may include comparing template cost of each of the TMRL candidates to the template cost of each of the BV predictors. The selecting of the candidate may include selecting the best candidate from the updated TMRL candidate list.

A set of BV predictors (e.g., available BV predictors) may be obtained. The BV predictors are the same used for DIMD, TIMD and SGPM. Specifically, the block vectors of the neighboring blocks that include BVs may be collected. Those blocks may correspond to the one coded in IntraTMP, IBC, TIMD, TIMD, SGPM, and/or TMRL. The process of ARBVP may be used to generate further BV candidates.

The TMRL candidate list may be updated based on the set of TMRL combinations and the set of BV predictors (e.g., available BV predictors). The TMRL process may be performed as it is. It results in 20 combinations, each being an intra mode with an MRL index. The template cost is used to compare these combinations to the template cost of the available BV candidates, and a candidate (e.g., the best candidate) may be selected.

The final prediction may be performed by first decoding the TMRL index. The index may be used to find the candidate inside the TMRL combinations list. If the candidate is found to be the first BV, the block vector may be used to generate the final prediction. Otherwise, the regular prediction mode with its MRL index may be used for the final prediction. For example, a video block may be predicted based on the selected candidate.

TMRL may be allowed with BV. The TMRL process may be extended with BVs. The initial candidate list of intra modes (e.g., 10, with MRL) may be augmented with the available block vectors. The template analysis may be performed to find out combinations (e.g., the best, 20 combinations) out of the regular candidates (e.g., 50, or 5*10) and the N BVs. N may be the number of BVs.

A set of available BV predictors (e.g., the initial regular 10 candidates) may be obtained. A set of available BV predictors (assuming M candidates) may be obtained.

The obtaining the set of available BV predictors may include calculating a template cost of a set of BVs. The set of BV candidates may include a number of BV predictors in the set of BV predictors multiplied by a number of MRL values. The template cost of the candidates (e.g., 50 candidates) of regular modes (e.g., 10 regular modes with 5 MRL values) may be calculated. The template cost of the 5xM BV candidates (M BVs with 5 MRL values) may be calculated.

The updating of the TMRL candidate list may include adding the set of BV candidates to the TMRL candidate list. The BV candidates may be put in a list. Combinations (e.g., the best 20 combinations) may be selected. A subset of the updated TMRL candidate list may be selected.

An index may be signaled (e.g., sent or received) to indicate a candidate from the subset of the updated TMRL candidate list to be used for prediction (e.g., which combination is used for prediction).

The BVs of the neighboring blocks may be examined by the template cost. Each BV predictor may be shifted with the available MRL values (5 values). The template cost may be calculated.

The final prediction may be performed by first decoding the TMRL index. The index may be used to find the candidate inside the TMRL combinations list. If the candidate is found to be BVone, the block vector may be used to generate the final prediction. The MRL index may be used to shift the BV when copying from the reference area. Otherwise, the regular prediction mode with its MRL index may be used for the final prediction.

The "M" value may be reduced by considering BV predictors (the best BV predictors) according to the template cost. For example, up to 5 BVs may be added to TMRL process. These BVs (e.g., 5 BVs) may represent the BV predictor candidates with the minimum template cost.

Fusion of TMRL and BV may be provided herein. If the template cost of BV is better or similar to the one of the TMRL mode. If it is the case, a blending process of the two predictions (TMRL and BV one) is performed.

A subset of candidates (e.g., the initial regular 10 candidates) may be obtained. The available BV predictors (assuming M candidates) may be obtained. The template cost of a set of candidates associated with eh available BV predictors of regular modes (e.g., 50, 10 regular modes with 5 MRL values) may be calculated. The combinations (e.g., the best 20 combinations) may be put in a list and selected. The template cost of the M BV candidates may be calculated. A BV (e.g., best BV) according to the template cost may be selected. The blending weights of the BV (e.g., best BV) and each of the combinations (e.g., 20 TMRL combinations) in the set of TMRL combinations may be calculated to generate an updated TMRL candidate list. An index may be signaled (e.g., sent or received) to indicate which combination is used.

The final prediction may be performed by first decoding the TMRL index. The index may be used to find the candidate inside the TMRL combinations list. The regular prediction mode with its MRL index may be used for the final prediction. The template cost of this regular mode may be computed and compared to the template cost of the best block vector. If the template cost of BV is less than or similar to (e.g., not significantly more) the regular mode (e.g., typically not more than 10%), the blending of the two predictions may be performed.

The blending weights may be set to be equal (e.g., 0.5 for each prediction), or some other fixed values. Otherwise, it can be adaptive to the template cost. The lower the template cost is, the higher the blending weight may be. In other words, higher weight may be given for better predictors. Furthermore, it may be adaptive to the sample position based in the block to predict.

MRL (as opposed to TMRL) may be combined with BV-based prediction. The regular MRL coding mode, which is not template-based as opposed TMRL, may be combined with block vector-based prediction.

One BV predictor may be derived from neighboring and non-adjacent previously coded blocks as in coding modes like DIMD, TIMD and SGPM,. This BV may be issued from a previous block coded/decoded in IntraTMP, IBC, TIMD, TIMD, SGPM, TMRL, and/or MRL.

In additional to the MRL index explicit signaling of the regular MRL mode, a fusion flag may be explicitly signaled (e.g., sent or received), to indicate that blending between the MRL-based prediction block of current block, and the BV-based prediction block of current block.

In an example, the fusion flag may be signaled only for some specific MRL index value and may be inferred to false for other MRL index values.

In an example, the blending between an MRL-based prediction and the BV-based prediction may employ some fixed blending weights (e.g., 0.5 and 0.5).

In an example, the blending between an MRL-based prediction and the BV-based prediction may employ some blending weights. These blending weights may be sample position based in the block to predict.

In an example, the blending between an MRL-based prediction and the BV-based prediction may employ some blending weights which may be adaptive to the template cost.

The following is a non-exhaustive list of numbered examples.

Example 1.1. A method implemented by a video encoding device, the method comprising:
obtaining a template-based multiple reference line intra prediction (TMRL) candidate list comprising a set of TMRL combinations, wherein each TMRL combination comprises an index to a reference line and an allowed intra-prediction mode;
obtaining a set of available block vector (BV) predictors;
updating the TMRL candidate list based on the set of TMRL combinations and the set of available BV predictors;
selecting a candidate for prediction from the updated TMRL candidate list; and
predicting a video block based on the selected candidate.

Example 1.2. The method for video encoding of claim 1, wherein the TMRL candidate list is obtained using template cost, and the updating of the TMRL candidate list comprises comparing template cost of each of the TMRL candidates to the template cost of each of the BV predictors; and wherein the selecting of the candidate comprises selecting the best candidate from the updated TMRL candidate list.

Example 1.3. The method for video encoding of claim 1, wherein the obtaining the set of available BV predictors comprises calculating template cost of a set of BV candidates, wherein the set of BV candidates comprises a number of BV predictors in the set of BV predictors multiplied by a number of MRL values; wherein the updating of the TMRL candidate list comprises adding the set of BV candidates to the TMRL candidate list; and wherein the method further comprises selecting a subset of the updated TMRL candidate list.

Example 1.4. The method for video encoding of claim 3, wherein the method further comprises receiving an index indicating a candidate from the subset of the updated TMRL candidate list to be used for prediction.

Example 1.5. The method for video encoding of claim 1 or claim 3, wherein the obtaining of the BV predictors further comprises obtaining the BV predictors based on BVs collected using at least one of an IntraTMP mode, IBC mode, TIMD mode, TIMD mode, SGPM mode, or TMRL mode.

Example 1.6. The method for video encoding of claim 1 or claims 3 through 12, wherein the obtaining of the BV predictors further comprises obtaining the BV predictors based on BVs that are generated using ARBVP process.

Example 1.7. The method for video encoding of any of claim 1 or claims 3 through 13, wherein the predicting of the video block based on the selected candidate further comprises: using a BV to generate prediction, if the selected candidate is a BV predictor; and using a prediction mode and an MRL index associated with the selected candidate, if the selected candidate is a TMRL candidate.

Example 1.8. A video encoding method comprising: obtaining a template-based multiple reference line intra prediction (TMRL) candidate list comprising a set of TMRL combinations, wherein each TMRL combination comprises an index to a reference line and an allowed intra-prediction mode; obtaining a set of available block vector (BV) predictors; calculating template cost of a set of BV candidates associated with the available BV predictors; selecting the best BV from the set of BV candidates based on template cost; calculating blending weights of the best BV and each of the TMRL combination in the set of TMRL combinations to generate an updated TMRL candidate list; selecting a candidate for prediction from the updated TMRL candidate list; predicting a video block based on the selected candidate.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A video decoding device comprising:
a processor configured to at least:
obtain a template-based multiple reference line intra prediction (TMRL) candidate list comprising a set of TMRL combinations, wherein each TMRL combination comprises an index to a reference line and an allowed intra-prediction mode;
obtain a set of available block vector (BV) predictors;
update the TMRL candidate list based on the set of TMRL combinations and the set of available BV predictors;
select a candidate for prediction from the updated TMRL candidate list; and
predict a video block based on the selected candidate.

2. The video decoding device of claim 1,
wherein the TMRL candidate list is obtained using template cost, and wherein the processor being configured to update the TMRL candidate list comprises the processor being configured to compare template cost of each of the TMRL candidates to the template cost of each of the BV predictors; and
wherein the processor being configured to select the candidate comprises the processor being configured to select the best candidate from the updated TMRL candidate list.

3. The video decoding device of claim 1,
wherein the processor being configured to obtain the set of available BV predictors comprises the processor being configured to calculate template cost of a set of BV candidates, wherein the set of BV candidates comprises a number of BV predictors in the set of BV predictors multiplied by a number of MRL values;
wherein the processor being configured to update the TMRL candidate list comprises the processor being configured to add the set of BV candidates to the TMRL candidate list; and
wherein the processor is configured to select a subset of the updated TMRL candidate list.

4. The video decoding device of claim 3, wherein the processor is configured to receive an index indicating a candidate from the subset of the updated TMRL candidate list to be used for prediction.

5. The video decoding device of claim 1 or claim 3, wherein the processor being configured to obtain the BV predictors comprises the processor being configured to obtain the BV predictors based on BVs collected using at least one of an IntraTMP mode, IBC mode, TIMD mode, TIMD mode, SGPM mode, or TMRL mode.

6. The video decoding device of claim 1 or claims 3 through 5, wherein the processor being configured to obtain the BV predictors comprises the processor being configured to obtain the BV predictors based on BVs that are generated using ARBVP process.

7. The video decoding device of any of claim 1 or claims 3 through 6, wherein the processor being configured to predict the video block based on the selected candidate comprises:
using a BV to generate prediction, if the selected candidate is a BV predictor; and
using a prediction mode and an MRL index associated with the selected candidate, if the selected candidate is a TMRL candidate.

8. A method for video decoding, comprising:
obtaining a template-based multiple reference line intra prediction (TMRL) candidate list comprising a set of TMRL combinations, wherein each TMRL combination comprises an index to a reference line and an allowed intra-prediction mode;
obtaining a set of available block vector (BV) predictors;
updating the TMRL candidate list based on the set of TMRL combinations and the set of available BV predictors;
selecting a candidate for prediction from the updated TMRL candidate list; and
predicting a video block based on the selected candidate.

9. The method for video decoding of claim 8, wherein the TMRL candidate list is obtained using template cost, and the updating of the TMRL candidate list comprises comparing template cost of each of the TMRL candidates to the template cost of each of the BV predictors; and
wherein the selecting of the candidate comprises selecting the best candidate from the updated TMRL candidate list.

10. The method for video decoding of claim 8,
wherein the obtaining the set of available BV predictors comprises calculating template cost of a set of BV candidates, wherein the set of BV candidates comprises a number of BV predictors in the set of BV predictors multiplied by a number of MRL values;
wherein the updating of the TMRL candidate list comprises adding the set of BV candidates to the TMRL candidate list; and
wherein the method further comprises selecting a subset of the updated TMRL candidate list.

11. The method for video decoding of claim 10, wherein the method further comprises receiving an index indicating a candidate from the subset of the updated TMRL candidate list to be used for prediction.

12. The method for video decoding of claim 8 or claim 10, wherein the obtaining of the BV predictors further comprises obtaining the BV predictors based on BVs collected using at least one of an IntraTMP mode, IBC mode, TIMD mode, TIMD mode, SGPM mode, or TMRL mode.

13. The method for video decoding of claim 8 or claims 10 through 12, wherein the obtaining of the BV predictors further comprises obtaining the BV predictors based on BVs that are generated using ARBVP process.

14. The method for video decoding of any of claim 8 or claims 10 through 13, wherein the predicting of the video block based on the selected candidate further comprises:
using a BV to generate prediction, if the selected candidate is a BV predictor; and
using a prediction mode and an MRL index associated with the selected candidate, if the selected candidate is a TMRL candidate.

15. A video decoding device comprising:
a processor configured to at least:
obtain a template-based multiple reference line intra prediction (TMRL) candidate list comprising a set of TMRL combinations, wherein each TMRL combination comprises an index to a reference line and an allowed intra-prediction mode;
obtain a set of available block vector (BV) predictors;
calculate template cost of a set of BV candidates associated with the available BV predictors;
select the best BV from the set of BV candidates based on template cost;
calculate blending weights of the best BV and each of the TMRL combination in the set of TMRL combinations to generate an updated TMRL candidate list;
select a candidate for prediction from the updated TMRL candidate list;
predict a video block based on the selected candidate.
